(19)

**Europäisches Patentamt**
**European Patent Office**
**Office européen des brevets**

(11)    **EP 2 479 917 B1**

(12)                **EUROPEAN PATENT SPECIFICATION**

(45) Date of publication and mention
of the grant of the patent:
**14.01.2026 Bulletin 2026/03**

(21) Application number: **10827820.1**

(22) Date of filing: **28.06.2010**

(51) International Patent Classification (IPC):
$H04L\ 1/00^{(2006.01)}$        $H04L\ 1/16^{(2023.01)}$
$H04L\ 1/06^{(2006.01)}$        $H04B\ 7/26^{(2006.01)}$

(52) Cooperative Patent Classification (CPC):
**H04L 1/0059; H04L 1/003; H04L 1/0057;**
**H04L 1/0073; H04L 1/1607; H04L 1/1671;**
H04L 2001/125

(86) International application number:
**PCT/CN2010/074591**

(87) International publication number:
**WO 2011/054206 (12.05.2011 Gazette 2011/19)**

(54) **ENCODING METHOD AND APPARATUS FOR ACKNOWLEDGEMENT/ NEGATIVE ACKNOWLEDGEMENT RESPONSE MESSAGE AND RANK INDICATOR SIGNALING**

CODIERVERFAHREN UND VORRICHTUNG ZUR BESTÄTIGUNG / NICHT-BESTÄTIGUNG EINER ANTWORTNACHRICHT UND RANGANZEIGESIGNALISIERUNG

PROCÉDÉ ET APPAREIL D'ENCODAGE POUR MESSAGE DE RÉPONSE À ACCUSÉ DE RÉCEPTION/ACCUSÉ DE RÉCEPTION NÉGATIF ET SIGNALISATION D'INDICATEUR DE RANG

(84) Designated Contracting States:
**AL AT BE BG CH CY CZ DE DK EE ES FI FR GB**
**GR HR HU IE IS IT LI LT LU LV MC MK MT NL NO**
**PL PT RO SE SI SK SM TR**

(30) Priority:  **05.11.2009  CN 200910221256**

(43) Date of publication of application:
**25.07.2012  Bulletin 2012/30**

(73) Proprietor: **Hedwig Wireless Technologies LLC**
**Round Rock TX (US)**

(72) Inventors:
• **YANG, Weiwei**
**Guangdong 518057 (CN)**
• **XU, Jun**
**Guangdong 518057 (CN)**
• **LIANG, Chunli**
**Guangdong 518057 (CN)**
• **XIA, Shuqiang**
**Guangdong 518057 (CN)**

(74) Representative: **Bosch Jehle**
**Patentanwaltsgesellschaft mbH**
**Flüggenstraße 13**
**80639 München (DE)**

(56) References cited:
EP-A1- 1 231 806        WO-A1-2008/111798
CN-A- 1 630 380         CN-A- 101 227 233
CN-A- 101 340 442       CN-A- 101 572 591
CN-A- 101 699 781       US-A1- 2008 301 536

• **HUAWEI: "PUCCH design for carrier aggregation", 3GPP DRAFT; R1-093046, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Shenzhen, China; 20090818, 18 August 2009 (2009-08-18), XP050351438, [retrieved on 20090818]**
• **"LTE for UMTS: OFDMA and SC-FDMA Based Radio Access", 12 June 2009, WILEY, ISBN: 978-0-47-099401-6, article ANTII TOSKALA ET AL: "Physical Layer (Chapter 5)", pages: 83 - 135, XP055051915, DOI: 10.1002/9780470745489.ch5**

EP 2 479 917 B1

## Description

### Field of the Invention

The present invention relates to the communication field, and in particular to a method and an apparatus for encoding an acknowledgement/negative acknowledgement response message and a rank indicator signalling.

### Background of the Invention

The rapid development of the digital communication system has put forward higher requirements for the reliability of digital communications. However, in a worse channel, especially in a high data rate or a high-speed mobile environment, the system performance is seriously affected by the multi-path interference, the Doppler frequency shift and etc. Therefore, an effective technology for controlling errors, especially the hybrid automatic repeat request (HARQ) technology becomes a hot spot that the communication field is committed to research. In the HARQ mode, codes transmitted by a transmitting end not only can detect errors, but also have a certain error correction capability. After having received the code words, the decoder of a receiving end first detects the error conditions, and if it is within the error correction capability of the codes, then the error correction is automatically implemented; and if there are too many errors which exceed the error correction capability of codes, but still the errors can be detected, then the receiving end transmits a judgment signal to the transmitting end and requires the transmitting end to retransmit the information. In an OFDM system, the correct or incorrect transmission is represented by an acknowledgement/negative acknowledgement (ACK/NACK) response message control signalling, and whether the retransmission is needed is also judged according to this.

In the downlink HARQ of the long term evolution (LTE) system, for the ACK/NACK response message of a physical downlink shared channel (PDSCH), a user equipment (UE) should feedback an ACK/NACK response message with 1 bit when the PDSCH only contains one transport block and the UE should feedback an ACK/NACK response message with 2 bits when the PDSCH contains two transport blocks.

In the LTE system, the realization of the precoding technology is to set a codebook (a set of precoding matrixes) through a UE and an eNodeB (eNB), and the UE selects the optimum precoding matrix from the codebook according to certain rules and feeds back a precoding matrix index (PMI) to the eNB, and the eNB searches the corresponding precoding matrix in the codebook according to the received PMI and applies this precoding matrix to implement the precoding transmission in a downlink transmitting, and it also needs to feed back a rank indicator (RI) signalling in an uplink channel, wherein the signalling represents the number of layers of the downlink transmitting.

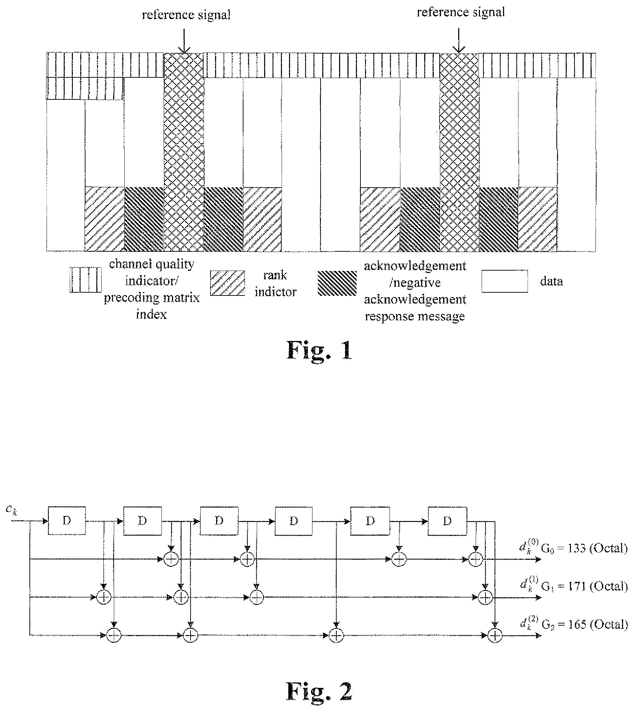

In the LTE system, the ACK/NACK response message is transmitted on a physical uplink control channel (PUCCH) with a format 1/1 a/l b, and in order to maintain the characteristic of the single-carrier in the uplink, the ACK/ NACK response message is transmitted on a physical uplink shared channel (PUSCH) when the UE needs to transmit data; the RI signalling is transmitted on the PUCCH, and if the UE needs to transmit data, the RI signalling is also transmitted on the PUSCH, or when the non-periodic CQI/PMI/RI is reported, the RI signalling is also transmitted on the PUSCH. As shown in Fig. 1, Fig. 1 is a schematic diagram of transmitting the acknowledgement/negative acknowledgement response message and the rank indicator signalling on the PUSCH in the LTE system according to the relevant art.

When the ACK/NACK response message and the RI signalling need to be transmitted on the physical uplink shared channel, the applied encoding mode is as follows:

(1 ) when the ACK/NACK response message or the RI signalling is 1 bit, namely is $[O_0]$, the meaning for the ACK/NACK response message is as follows: the ACK response message corresponds to '1', and the NACK response message corresponds to '0'; and the meaning for the RI signalling is as shown in table 1 and the applied encoding mode is as shown in table 2 (the encoding mode of 1 bit the ACK/NACK response message or the RI signalling under different modulation symbols):

Table 1

| A table of the corresponding relation between the $o_0^{RI}$ and the RI | |
|---|---|
| $o_0^{RI}$ | RI |
| 0 | 1 |
| 1 | 2 |

Table 2 A schematic table of the encoded HARQ-ACK or the encoded RI

| $Q_m$ | the encoded HARQ-ACK or the encoded RI |
|---|---|
| 2 | $[O_0\ y]$ |
| 4 | $\begin{bmatrix} o_0^{ACK} & y & x & x \end{bmatrix}$ |
| 6 | $[O_0\ yxxxx]$ |

In the above, $Q_m$ is a modulation mode, x and y are placeholders, and the above encoded bit information is repeated and the encoded information with the corresponding length is intercepted according to the encoded target lengths $Q_{ACK}$ and $Q_{RI}$ of the transmitted feedback information; and

(2) when the ACK/NACK response message or the RI signalling is 2 bits, namely is $[O_0O_1]$, the meaning for the ACK/NACK response message is as follows: $O_0^{ACK}$ corresponds to the ACK/NACK feedback of the code word 0, and $O_1^{ACK}$ corresponds to the feedback of the code word 1; and the meaning for the RI signalling is as shown in table 3 and the applied encoding mode is as shown in table 4 (the encoding mode of 2 bits the ACK/NACK response message or the RI signalling under different modulation symbols):

Table 3

| A schematic table of the corresponding relation between the $[o_0^{RI}\ o_1^{RI}]$ and the RI | |
|---|---|
| $o_0^{RI}, o_1^{RI}$ | RI |
| 0,0 | 1 |
| 0,1 | 2 |
| 1,0 | 3 |
| 1,1 | 4 |

Table 4 A schematic table of the encoded HARQ-ACK or the encoded RI

| $Q_m$ | the encoded HARQ-ACK or the encoded RI |
|---|---|
| 2 | $[O_0\ O_1\ O_2\ O_0\ O_1\ O_2]$ |
| 4 | $[O_0\ O_1\ xx\ O_2\ O_0\ X\ X\ O_1\ O_2\ x\ x]$ |
| 6 | $[O_0\ O_1\ xxxx\ O_2\ O_0\ xxxx\ O_1\ O_2\ xxxx]$ |

In the above, $Q_m$ is a modulation mode, x and y are placeholders, wherein $O_2=(O_1+O_0)$ mod 2, and the above encoded bit information is repeated and the encoded information with the corresponding length is intercepted according to the encoded target lengths $Q_{ACK}$ and $Q_{RI}$ of the transmitted feedback information.

In the LTE system, because the downlink transmission at most supports 4 layers, the feedback of 2 bits RI signalling is used, but for the ACK/NACK response message, in the TDD system, because the proportional relation between the uplink and the downlink sub-frames is configurable, when the number of the downlink sub-frames is greater than the number of the uplink sub-frames, there is a situation that one uplink sub-frame needs to feed back the ACK/NACK response messages of the PDSCH corresponding to a plurality of downlink sub-frames, therefore the encoding mode as the ACK/NACK response message is greater than 2 bits is specified in the LTE system:

when the ACK/NACK response message is greater than 2 bits, namely is $\begin{bmatrix} o_0^{ACK} & o_1^{ACK} & \cdots o_{O^{ACK}-1}^{ACK} \end{bmatrix}$, the encoded bits

sequence is $q_0^{ACK}, q_1^{ACK}, q_2^{ACK}, \ldots, q_{Q_{ACK}-1}^{ACK}$, which is acquired by the following mode:

$$q_i^{ACK} = \sum_{n=0}^{O^{ACK}-1} \left( o_n^{ACK} \cdot M_{(i \bmod 32),n} \right) \bmod 2 \, ,$$

mod 2, wherein i = 0, 1, 2, ..., $Q_{ACK-1}$.

In order to meet the requirements of the Advanced International Telecommunication Union, the long term evolution advanced (LTE-A) as the evolution standard of the LTE needs to support a greater system bandwidth (up to 100 MHz) and needs to have a backwards compatibility for the existing standards of the LTE. On the basis of the existing LTE system, the bandwidths of the LTE system can be aggregated to acquire a greater bandwidth, and this technology is referred to as the carrier aggregation (CA) technology, which technology can improve the utilization rate of the spectrum of the IMT-Advance and relieve the shortage of the spectrum resources, so as to optimize the utilization of the spectrum resources. In the LTE-A system, in order to support the downlink transmission capability, the transmission mode with 8 layers is supported.

In the LTE-A system which has applied the spectrum aggregation technology, the uplink bandwidth and the downlink bandwidth can comprise a plurality of component carriers. When the eNB has PDSCHs scheduled to a certain UE on a plurality of downlink component carriers, and when the UE needs to transmit a PUSCH on the current subframe, the user equipment needs to feed back the ACK/NACK response messages transmitted by the PDSCHs of the plurality of downlink component carriers on the PUSCH. According to the scenario of the carrier aggregation, in the TDD system, if the uplink and downlink sub-frames configuration in the conventional art is still used, then the number of the ACK/NACK response messages which needs to be fed back at most is 40, and if the binding operation is implemented on the code word corresponding to each carrier, then the number of the ACK/NACK response messages which needs to be fed back is also 20; for the RI signalling, because the downlink supports 8 layers transmission and the carrier aggregation technology is introduced, the feedback RI signalling is made to be greater than 2 bits.

In the relevant art, the transmission of the ACK/NACK response message with at most 11 bits or the transmission of the RI signalling with at most 2 bits can be supported on the PUSCH, and when the ACK/NACK response message which needs to be fed back is greater than 11 bits and the RI signalling is greater than 2 bits, a problem exists in their transmission on the PUSCH, and currently an effective solution has not been proposed yet.

US 2008/301536 A1 discloses channel coding and rate matching for LTE control channels. EP 1231806A1 discloses channel structure for data transmission. Document Antii Toskala ETAL: "Physical Layer (Chapter 5)"In: "LTE for UMTS: OLDMA and SC-LDMA Based Radio Access", 12 June 2009 (2009-06-12), Wiley, XP055051915, ISBN: 978-0-47-099401-6 pages 83-135, DOI: 10.1002/9780470745489.ch5, discloses aspects of LTE for UMTS.


Summary of the Invention

The invention is defined in the independent claims. Further aspects and preferred embodiments are defined in the dependent claims. Any aspects, embodiments and examples of the present disclosure which do not fall under the scope of the appended claims do not form part of the invention and are merely provided for illustrative purposes. The present invention is proposed aiming at the problem that the conventional art does not support the transmission of the RI signalling greater than 2 bits and the ACK/NACK response message greater than 11 bits which need to be fed back on the PUSCH, therefore, the present invention provides a method and an apparatus for encoding an acknowledgement/negative acknowledgement response message and a rank indicator signalling, so as to solve at least one of the above problems.

A method for encoding an acknowledgement/negative acknowledgement response message is provided according to one aspect of the present invention.

The method for encoding an acknowledgement/negative acknowledgement response message according to the present invention comprises: using an encoding mode of a convolutional code to encode the acknowledgement/negative acknowledgement response message when a bit number of a fed back acknowledgement/negative acknowledgement response message is greater than M, wherein the M is a positive integer which is greater than 2.

Preferably, using an encoding mode of a convolutional code to encode the acknowledgement/negative acknowledgement response message comprises: using an encoding mode of a tail-biting convolutional code to encode the acknowledgement/negative acknowledgement response message; and after using the encoding mode of a tail-biting convolutional code to encode the acknowledgement/negative acknowledgement response message, the method further comprises: repeating bit information of the encoded acknowledgement/negative acknowledgement response message, and intercepting the repeated bit information from a starting location of the repeated bit information according to a target length of feedback information.

Preferably, the M comprises one of the followings: 11, 12 and 13.

A method for encoding a rank indicator signalling is provided according to another aspect of the present invention.

The method for encoding a rank indicator signalling according to the present invention comprises: using an encoding mode of a linear block code to encode the rank indicator signalling when a bit number of a fed back rank indicator signalling is greater than 2.

Preferably, using the encoding mode of a linear block code to encode the rank indicator signalling when the bit number of the fed back rank indictor signalling is greater than 2 comprises: using the encoding mode of a linear block code to encode the rank indicator signalling when a bit number is greater than 2 and no more than N; and using an encoding mode of a convolutional code to encode the rank indicator signalling when the bit number is greater than the N, wherein the N is a positive integer which is greater than 2.

Preferably, using the encoding mode of a linear block code to encode the rank indicator signalling comprises: using a length of a basic sequence to encode the rank indicator signalling through the following formula:

$$b_i = \sum_{n=0}^{O-1} \left( o_n \cdot M_{i,n} \right) \bmod 2$$, wherein i= 0, 1, 2, ..., B-1, $b_0, b_1, b_2, b_3, ..., b_{B-1}$ represent the encoded bits, B represents the length of the basic sequence, $M_{i,n}$ represents the value of the serial number i in the basic sequence n, and $O_0, O_1, ..., O_{O-1}$ represent rank indicator signallings; and after using the encoding mode of a linear block code to encode the rank indicator signalling, the method further comprises: repeating bit information of the encoded rank indicator signalling, and intercepting the repeated bit information from a starting location of the repeated bit information according to a target length of feedback information.

Preferably, using the encoding mode of a convolutional code to encode the rank indicator signalling comprises: using an encoding mode of a tail-biting convolutional code to encode the rank indicator signalling; and after using the encoding mode of a tail-biting convolutional code to encode the rank indicator signalling, the method further comprises: repeating bit information of the encoded rank indicator signalling, and intercepting the repeated bit information from a starting location of the repeated bit information according to a target length of feedback information.

Preferably, the N comprises one of the followings: 11, 12 and 13.

An apparatus for encoding an acknowledgement/negative acknowledgement response message is provided according to another aspect of the present invention.

The apparatus for encoding an acknowledgement/negative acknowledgement response message according to the present invention comprises: a first encoding module, which is configured to use an encoding mode of a convolutional code to encode the acknowledgement/negative acknowledgement response message when a bit number of a fed back acknowledgement/negative acknowledgement response message is greater than M, wherein the M is a positive integer which is greater than 2.

An apparatus for encoding a rank indicator signalling is provided according to another aspect of the present invention.

The apparatus for encoding the rank indicator signalling according to the present invention comprises: a second encoding module, which is configured to use an encoding mode of a linear block code to encode the rank indicator signalling when a bit number of a fed back rank indictor signalling is greater than 2.

By virtue of the present invention, the solution of using the encoding mode of a convolutional code to encode the acknowledgement/negative acknowledgement response message when the bit number of the fed back acknowledgement/negative acknowledgement response message is greater than M, wherein the M is a positive integer which is greater than 2; and using the encoding mode of a linear block code to encode the rank indicator signalling when the bit number of the fed back rank indicator signalling is greater than 2 is applied, thus the problem that the conventional art does not support the transmission of the RI signalling greater than 2 bits and the ACK/NACK response message greater than 11 bits which need to be fed back on the PUSCH is solved, and the effect of ensuring a reliable transmission of the acknowledgement/negative acknowledgement response message and the rank indicator signalling on the PUSCH is achieved.

**Brief Description of the accompanying drawings**

The drawings illustrated herein provide a further understanding of the present invention and form a part of the present application. The exemplary embodiments and the description thereof are used to explain the present invention without unduly limiting the scope of the present invention. In the drawings:

Fig. 1 is a schematic diagram of transmitting the acknowledgement/negative acknowledgement response message and the rank indicator signalling on the PUSCH in the LTE system according to the relevant art;
Fig. 2 is a schematic diagram of a tail-biting convolutional code the constraint length of which is 7 and the bit rate of which is 1/3 according to an embodiment of the present invention;
Fig. 3 is a structural block diagram of an apparatus for encoding an acknowledgement/negative acknowledge response message according to an embodiment of the present invention; and
Fig. 4 is a structural block diagram of an apparatus for encoding a rank indicator signalling according to an embodiment of the present invention.

**Detailed Description of the Embodiments**

Considering the problem that the conventional art does not support the transmission of the RI signalling greater than 2 bits and the ACK/NACK response message greater than 11 bits which need to be fed back on the PUSCH, the present invention provides a method and an apparatus for encoding an acknowledgement/negative acknowledgement response message and a rank indicator signalling, thus the problem that the conventional art does not support the transmission of the RI signalling greater than 2 bits and the ACK/NACK response message greater than 11 bits which need to be fed back on the PUSCH is solved, and the effect of ensuring the reliable transmission of the acknowledgement/negative acknowledgement response message and the rank indicator signalling on the PUSCH is achieved.

It should be noted that the embodiments and the features of the embodiments in the present invention can be combined with each other if there is no conflict. The present invention is described in detail hereinafter with reference to the accompanying drawings and in combination with the embodiments.

The method for encoding an acknowledgement/negative acknowledgement response message is provided according to an embodiment of the present invention, which method comprises: using the encoding mode of a convolutional code to encode the acknowledgement/negative acknowledgement response message when the bit number of the fed back acknowledgement/negative acknowledgement response message is greater than M, wherein the M is a positive integer which is greater than 2.

Preferably, using the encoding mode of a convolutional code to encode the acknowledgement/negative acknowledgement response message comprises: using the encoding mode of a tail-biting convolutional code to encode the acknowledgement/negative acknowledgement response message; and after using the encoding mode of a tail-biting convolutional code to encode the acknowledgement/negative acknowledgement response message, the method further comprises: repeating the bit information of the encoded acknowledgement/negative acknowledgement response message, and intercepting the repeated bit information from the starting location of the repeated bit information according to a target length of feedback information.

In the above, the M preferably selects 11, 12 or 13.

The method for encoding a rank indicator signalling is provided according to an embodiment of the present invention, which method comprises: using the encoding mode of a linear block code to encode the rank indicator signalling when the bit number of the fed back rank indictor signalling is greater than 2.

Preferably, using the encoding mode of a linear block code to encode the rank indicator signalling when the bit number is greater than 2 and no more than N; and using the encoding mode of a convolutional code to encode the rank indicator signalling when the bit number is greater than the N, wherein the N is a positive integer which is greater than 2.

Preferably, using the encoding mode of a linear block code to encode the rank indicator signalling comprises: using the length of a basic sequence to encode a plurality of rank indicator signallings through the following formula:

$$b_i = \sum_{n=0}^{O-1} \left( o_n \cdot M_{i,n} \right) \bmod 2$$

, wherein i = 0, 1, 2, ..., B-1, $b_0,b_1,b_2,b_3,...,b_{B-1}$ represent the encoded bits, B represents the length of the basic sequence, $M_{i,n}$ represents the value of the serial number i in the basic sequence n, and $0_0$, 01, ..., $0_{0-1}$ represent rank indicator signallings; and after using the encoding mode of a linear block code to encode the rank indicator signalling, the method further comprises: repeating the bit information of the above encoded rank indicator signallings, and intercepting the repeated bit information from the starting location of the repeated bit information according to a target length of feedback information.

In the above, using the encoding mode of a convolutional code to encode the rank indicator signalling comprises: using the encoding mode of a tail-biting convolutional code to encode the rank indicator signalling; and after using the encoding mode of a tail-biting convolutional code to encode the rank indicator signalling, the method further comprises: repeating the bit information of the encoded rank indicator signalling, and intercepting the repeated bit information from the starting location of the repeated bit information according to a target length of feedback information.

In the above, the tail-biting convolution code can use a tail-biting convolution code the constraint length of which is 7 and the bit rate of which is 1/3 as shown in Fig. 2.

In the above, the N preferably selects 11 or 12 or 13.

The process of realizing the embodiments of the present invention will be described in detail hereinafter in conjunction with the examples.

Embodiment 1

In this embodiment, for an ACK/NACK response message, the target length of transmitting the encoded feedback information is $Q_{ACK}$, and the polynomial corresponding to the cyclic redundancy check is gCRC8(D) = [D8 + D7 + D4 + D3 + D + 1]:

Example 1

In this example, in the TDD system, the number of the ACK/NACK response messages which need to be fed back is 12 in the scenario of carrier aggregation, respectively are $\begin{bmatrix} o_0^{ACK} & o_1^{ACK} & \cdots o_{11}^{ACK} \end{bmatrix}$, and a tail-biting convolutional code the constraint length of which is 7 and the bit rate of which is 1/3 as shown in Fig. 2 is used to encode, the encoded information is repeated, and then according to the encoded target length $Q_{ACK}$ of the transmitted feedback information, the encoded information with the corresponding length $q_0^{ACK}, q_1^{ACK}, q_2^{ACK}, ..., q_{Q_{ACK}-1}^{ACK}$ is intercepted from the starting location.

Example 2

In this example, in the TDD system, the number of the ACK/NACK response messages which need to be fed back is 12 in the scenario of carrier aggregation, respectively are $[o_0^{ACK} \ o_1^{ACK} \cdots o_{11}^{ACK}]$, and the cyclic redundancy code the length of which is 8 is first used to add the cyclic redundancy check, then a tail-biting convolutional code the constraint length of which is 7 and the bit rate of which is 1/3 as shown in Fig. 2 is used to encode, the encoded information is repeated, and then according to the encoded target length $Q_{ACK}$ the transmitted feedback information, the encoded information with the corresponding length $q_0^{ACK}, q_1^{ACK}, q_2^{ACK}, ..., q_{Q_{ACK}-1}^{ACK}$ is intercepted from Embodiment 2,

In this embodiment, for an RI signalling, the encoded target length of the transmitted feedback information is $Q_{RI}$; assume that the linear block code uses the Reed-Muller code, the basic sequence is shown as table 5 or table 6, and the basic sequence can also be the permutation sequence of the basic sequence shown in table 5 or table 6, which is shown as table 7 and table 8, of course the other permutation forms are not exclude, and then the corresponding M value respectively is M=13 and M=11 , assume that the polynomial corresponding to the cyclic redundancy check is

$$g_{CRC8}(D) = [D8 + D7 + D4 + D3 + D + 1].$$

Table 5 A schematic table of the basic sequence 1 of the (32, O) code

| i | $M_{i,0}$ | $M_{i,1}$ | $M_{i,2}$ | $M_{i,3}$ | $M_{i,4}$ | $M_{i,5}$ | $M_{i,6}$ | $M_{i,7}$ | $M_{i,8}$ | $M_{i,9}$ | $M_{i,10}$ | $M_{i,11}$ | $M_{i,12}$ |
|---|---|---|---|---|---|---|---|---|---|---|---|---|---|
| 0 | 1 | 1 | 0 | 0 | 0 | 0 | 0 | 0 | 0 | 0 | 1 | 1 | 0 |
| 1 | 1 | 1 | 1 | 0 | 0 | 0 | 0 | 0 | 0 | 1 | 1 | 1 | 0 |
| 2 | 1 | 0 | 0 | 1 | 0 | 0 | 1 | 0 | 1 | 1 | 1 | 1 | 1 |
| 3 | 1 | 0 | 1 | 1 | 0 | 0 | 0 | 0 | 1 | 0 | 1 | 1 | 1 |
| 4 | 1 | 1 | 1 | 1 | 0 | 0 | 0 | 1 | 0 | 0 | 1 | 1 | 1 |
| 5 | 1 | 1 | 0 | 0 | 1 | 0 | 1 | 1 | 1 | 0 | 1 | 1 | 1 |
| 6 | 1 | 0 | 1 | 0 | 1 | 0 | 1 | 0 | 1 | 1 | 1 | 1 | 1 |
| 7 | 1 | 0 | 0 | 1 | 1 | 0 | 0 | 1 | 1 | 0 | 1 | 1 | 1 |
| 8 | 1 | 1 | 0 | 1 | 1 | 0 | 0 | 1 | 0 | 1 | 1 | 1 | 1 |
| 9 | 1 | 0 | 1 | 1 | 1 | 0 | 1 | 0 | 0 | 1 | 1 | 1 | 1 |
| 10 | 1 | 0 | 1 | 0 | 0 | 1 | 1 | 1 | 0 | 1 | 1 | 1 | 1 |
| 11 | 1 | 1 | 1 | 0 | 0 | 1 | 1 | 0 | 1 | 0 | 1 | 1 | 1 |
| 12 | 1 | 0 | 0 | 1 | 0 | 1 | 0 | 1 | 1 | 1 | 1 | 1 | 1 |
| 13 | 1 | 1 | 0 | 1 | 0 | 1 | 0 | 1 | 0 | 1 | 1 | 1 | 1 |
| 14 | 1 | 0 | 0 | 0 | 1 | 1 | 0 | 1 | 0 | 0 | 1 | 0 | 1 |
| 15 | 1 | 1 | 0 | 0 | 1 | 1 | 1 | 1 | 0 | 1 | 1 | 0 | 1 |

(continued)

| i | $M_{i,0}$ | $M_{i,1}$ | $M_{i,2}$ | $M_{i,3}$ | $M_{i,4}$ | $M_{i,5}$ | $M_{i,6}$ | $M_{i,7}$ | $M_{i,8}$ | $M_{i,9}$ | $M_{i,10}$ | $M_{i,11}$ | $M_{i,12}$ |
|---|---|---|---|---|---|---|---|---|---|---|---|---|---|
| 16 | 1 | 1 | 1 | 0 | 1 | 1 | 1 | 0 | 0 | 1 | 0 | 1 | 1 |
| 17 | 1 | 0 | 0 | 1 | 1 | 1 | 0 | 0 | 1 | 0 | 0 | 1 | 1 |
| 18 | 1 | 1 | 0 | 1 | 1 | 1 | 1 | 1 | 0 | 0 | 0 | 0 | 0 |
| 19 | 1 | 0 | 0 | 0 | 0 | 1 | 1 | 0 | 0 | 0 | 0 | 0 | 0 |
| 20 | 1 | 0 | 1 | 0 | 0 | 0 | 1 | 0 | 0 | 0 | 1 | 0 | 1 |
| 21 | 1 | 1 | 0 | 1 | 0 | 0 | 0 | 0 | 0 | 1 | 1 | 1 | 0 |
| 22 | 1 | 0 | 0 | 0 | 1 | 0 | 0 | 1 | 1 | 0 | 1 | 0 | 1 |
| 23 | 1 | 1 | 1 | 0 | 1 | 0 | 0 | 0 | 1 | 1 | 1 | 1 | 0 |
| 24 | 1 | 1 | 1 | 1 | 1 | 0 | 1 | 1 | 1 | 1 | 0 | 0 | 1 |
| 25 | 1 | 1 | 0 | 0 | 0 | 1 | 1 | 1 | 0 | 0 | 1 | 1 | 1 |
| 26 | 1 | 0 | 1 | 1 | 0 | 1 | 0 | 0 | 1 | 1 | 0 | 0 | 0 |
| 27 | 1 | 1 | 1 | 1 | 0 | 1 | 0 | 1 | 1 | 1 | 0 | 1 | 0 |
| 28 | 1 | 0 | 1 | 0 | 1 | 1 | 1 | 0 | 1 | 0 | 0 | 1 | 0 |
| 29 | 1 | 0 | 1 | 1 | 1 | 1 | 1 | 1 | 1 | 0 | 0 | 1 | 1 |
| 30 | 1 | 1 | 1 | 1 | 1 | 1 | 1 | 1 | 1 | 1 | 1 | 0 | 1 |
| 31 | 1 | 0 | 0 | 0 | 0 | 0 | 0 | 0 | 0 | 0 | 0 | 0 | 0 |

Table 6 A schematic table of the basic sequence 2 of the (32, O) code

| i | $M_{i,0}$ | $M_{i,1}$ | $M_{i,2}$ | $M_{i,3}$ | $M_{i,4}$ | $M_{i,5}$ | $M_{i,6}$ | $M_{i,7}$ | $M_{i,8}$ | $M_{i,9}$ | $M_{i,10}$ |
|---|---|---|---|---|---|---|---|---|---|---|---|
| 0 | 1 | 1 | 0 | 0 | 0 | 0 | 0 | 0 | 0 | 0 | 1 |
| 1 | 1 | 1 | 1 | 0 | 0 | 0 | 0 | 0 | 0 | 1 | 1 |
| 2 | 1 | 0 | 0 | 1 | 0 | 0 | 1 | 0 | 1 | 1 | 1 |
| 3 | 1 | 0 | 1 | 1 | 0 | 0 | 0 | 0 | 1 | 0 | 1 |
| 4 | 1 | 1 | 1 | 1 | 0 | 0 | 0 | 1 | 0 | 0 | 1 |
| 5 | 1 | 1 | 0 | 0 | 1 | 0 | 1 | 1 | 1 | 0 | 1 |
| 6 | 1 | 0 | 1 | 0 | 1 | 0 | 1 | 0 | 1 | 1 | 1 |
| 7 | 1 | 0 | 0 | 1 | 1 | 0 | 0 | 1 | 1 | 0 | 1 |
| 8 | 1 | 1 | 0 | 1 | 1 | 0 | 0 | 1 | 0 | 1 | 1 |
| 9 | 1 | 0 | 1 | 1 | 1 | 0 | 1 | 0 | 0 | 1 | 1 |
| 10 | 1 | 0 | 1 | 0 | 0 | 1 | 1 | 1 | 0 | 1 | 1 |
| 11 | 1 | 1 | 1 | 0 | 0 | 1 | 1 | 0 | 1 | 0 | 1 |
| 12 | 1 | 0 | 0 | 1 | 0 | 1 | 0 | 1 | 1 | 1 | 1 |
| 13 | 1 | 1 | 0 | 1 | 0 | 1 | 0 | 1 | 0 | 1 | 1 |
| 14 | 1 | 0 | 0 | 0 | 1 | 1 | 0 | 1 | 0 | 0 | 1 |
| 15 | 1 | 1 | 0 | 0 | 1 | 1 | 1 | 1 | 0 | 1 | 1 |
| 16 | 1 | 1 | 1 | 0 | 1 | 1 | 1 | 0 | 0 | 1 | 0 |
| 17 | 1 | 0 | 0 | 1 | 1 | 1 | 0 | 0 | 1 | 0 | 0 |
| 18 | 1 | 1 | 0 | 1 | 1 | 1 | 1 | 1 | 0 | 0 | 0 |
| 19 | 1 | 0 | 0 | 0 | 0 | 1 | 1 | 0 | 0 | 0 | 0 |

(continued)

| i | $M_{i,0}$ | $M_{i,1}$ | $M_{i,2}$ | $M_{i,3}$ | $M_{i,4}$ | $M_{i,5}$ | $M_{i,6}$ | $M_{i,7}$ | $M_{i,8}$ | $M_{i,9}$ | $M_{i,10}$ |
|---|---|---|---|---|---|---|---|---|---|---|---|
| 20 | 1 | 0 | 1 | 0 | 0 | 0 | 1 | 0 | 0 | 0 | 1 |
| 21 | 1 | 1 | 0 | 1 | 0 | 0 | 0 | 0 | 0 | 1 | 1 |
| 22 | 1 | 0 | 0 | 0 | 1 | 0 | 0 | 1 | 1 | 0 | 1 |
| 23 | 1 | 1 | 1 | 0 | 1 | 0 | 0 | 0 | 1 | 1 | 1 |
| 24 | 1 | 1 | 1 | 1 | 1 | 0 | 1 | 1 | 1 | 1 | 0 |
| 25 | 1 | 1 | 0 | 0 | 0 | 1 | 1 | 1 | 0 | 0 | 1 |
| 26 | 1 | 0 | 1 | 1 | 0 | 1 | 0 | 0 | 1 | 1 | 0 |
| 27 | 1 | 1 | 1 | 1 | 0 | 1 | 0 | 1 | 1 | 1 | 0 |
| 28 | 1 | 0 | 1 | 0 | 1 | 1 | 1 | 0 | 1 | 0 | 0 |
| 29 | 1 | 0 | 1 | 1 | 1 | 1 | 1 | 1 | 1 | 0 | 0 |
| 30 | 1 | 1 | 1 | 1 | 1 | 1 | 1 | 1 | 1 | 1 | 1 |
| 31 | 1 | 0 | 0 | 0 | 0 | 0 | 0 | 0 | 0 | 0 | 0 |

Table 7 A schematic table of the basic sequence 3 of the (32, O) code

| i | $M_{i,0}$ | $M_{i,1}$ | $M_{i,2}$ | $M_{i,3}$ | $M_{i,4}$ | $M_{i,5}$ | $M_{i,6}$ | $M_{1,7}$ | $M_{i,8}$ | $M_{i,9}$ | $M_{i,10}$ | $M_{i,11}$ | $M_{i,12}$ |
|---|---|---|---|---|---|---|---|---|---|---|---|---|---|
| 0 | 1 | 1 | 1 | 1 | 0 | 1 | 0 | 1 | 1 | 1 | 0 | 1 | 0 |
| 1 | 1 | 0 | 1 | 1 | 0 | 1 | 0 | 0 | 1 | 1 | 0 | 0 | 0 |
| 2 | 1 | 0 | 1 | 0 | 0 | 0 | 1 | 0 | 0 | 0 | 1 | 0 | 1 |
| 3 | 1 | 0 | 1 | 1 | 1 | 1 | 1 | 1 | 1 | 0 | 0 | 1 | 1 |
| 4 | 1 | 1 | 1 | 0 | 1 | 0 | 0 | 0 | 1 | 1 | 1 | 1 | 0 |
| 5 | 1 | 0 | 0 | 0 | 1 | 0 | 0 | 1 | 1 | 0 | 1 | 0 | 1 |
| 6 | 1 | 0 | 1 | 1 | 0 | 0 | 0 | 0 | 1 | 0 | 1 | 1 | 1 |
| 7 | 1 | 1 | 1 | 1 | 1 | 1 | 1 | 1 | 1 | 1 | 1 | 0 | 1 |
| 8 | 1 | 0 | 0 | 1 | 1 | 0 | 0 | 1 | 1 | 0 | 1 | 1 | 1 |
| 9 | 1 | 1 | 1 | 1 | 0 | 0 | 0 | 1 | 0 | 0 | 1 | 1 | 1 |
| 10 | 1 | 0 | 0 | 1 | 0 | 0 | 1 | 0 | 1 | 1 | 1 | 1 | 1 |
| 11 | 1 | 0 | 1 | 0 | 0 | 1 | 1 | 1 | 0 | 1 | 1 | 1 | 1 |
| 12 | 1 | 1 | 0 | 1 | 0 | 1 | 0 | 1 | 0 | 1 | 1 | 1 | 1 |
| 13 | 1 | 1 | 0 | 1 | 1 | 1 | 1 | 1 | 0 | 0 | 0 | 0 | 0 |
| 14 | 1 | 1 | 0 | 0 | 1 | 0 | 1 | 1 | 1 | 0 | 1 | 1 | 1 |
| 15 | 1 | 0 | 0 | 1 | 0 | 1 | 0 | 1 | 1 | 1 | 1 | 1 | 1 |
| 16 | 1 | 0 | 1 | 1 | 1 | 0 | 1 | 0 | 0 | 1 | 1 | 1 | 1 |
| 17 | 1 | 1 | 0 | 0 | 1 | 1 | 1 | 1 | 0 | 1 | 1 | 0 | 1 |
| 18 | 1 | 1 | 1 | 0 | 0 | 0 | 0 | 0 | 0 | 1 | 1 | 1 | 0 |
| 19 | 1 | 0 | 0 | 0 | 0 | 0 | 0 | 0 | 0 | 0 | 0 | 0 | 0 |
| 20 | 1 | 0 | 0 | 0 | 1 | 1 | 0 | 1 | 0 | 0 | 1 | 0 | 1 |
| 21 | 1 | 1 | 1 | 0 | 0 | 1 | 1 | 0 | 1 | 0 | 1 | 1 | 1 |
| 22 | 1 | 0 | 1 | 0 | 1 | 0 | 1 | 0 | 1 | 1 | 1 | 1 | 1 |
| 23 | 1 | 1 | 0 | 0 | 0 | 1 | 1 | 1 | 0 | 0 | 1 | 1 | 1 |

(continued)

| i | $M_{i,0}$ | $M_{i,1}$ | $M_{i,2}$ | $M_{i,3}$ | $M_{i,4}$ | $M_{i,5}$ | $M_{i,6}$ | $M_{1,7}$ | $M_{i,8}$ | $M_{i,9}$ | $M_{i,10}$ | $M_{i,11}$ | $M_{i,12}$ |
|---|---|---|---|---|---|---|---|---|---|---|---|---|---|
| 24 | 1 | 1 | 1 | 0 | 1 | 1 | 1 | 0 | 0 | 1 | 0 | 1 | 1 |
| 25 | 1 | 1 | 0 | 0 | 0 | 0 | 0 | 0 | 0 | 0 | 1 | 1 | 0 |
| 26 | 1 | 1 | 0 | 1 | 1 | 0 | 0 | 1 | 0 | 1 | 1 | 1 | 1 |
| 27 | 1 | 1 | 1 | 1 | 1 | 0 | 1 | 1 | 1 | 1 | 0 | 0 | 1 |
| 28 | 1 | 0 | 0 | 0 | 0 | 1 | 1 | 0 | 0 | 0 | 0 | 0 | 0 |
| 29 | 1 | 0 | 1 | 0 | 1 | 1 | 1 | 0 | 1 | 0 | 0 | 1 | 0 |
| 30 | 1 | 0 | 0 | 1 | 1 | 1 | 0 | 0 | 1 | 0 | 0 | 1 | 1 |
| 31 | 1 | 1 | 0 | 1 | 0 | 0 | 0 | 0 | 0 | 1 | 1 | 1 | 0 |

Table 8 A schematic table of the basic sequence 4 of the (32, O) code

| i | $M_{i,0}$ | $M_{i,1}$ | $M_{i,2}$ | $M_{i,3}$ | $M_{i,4}$ | $M_{i,5}$ | $M_{i,6}$ | $M_{i,7}$ | $M_{i,8}$ | $M_{i,9}$ | $M_{i,10}$ |
|---|---|---|---|---|---|---|---|---|---|---|---|
| 0 | 1 | 1 | 1 | 1 | 0 | 1 | 0 | 1 | 1 | 1 | 0 |
| 1 | 1 | 1 | 1 | 0 | 1 | 0 | 0 | 0 | 1 | 1 | 1 |
| 2 | 1 | 1 | 0 | 1 | 0 | 0 | 0 | 0 | 0 | 1 | 1 |
| 3 | 1 | 0 | 0 | 1 | 0 | 0 | 1 | 0 | 1 | 1 | 1 |
| 4 | 1 | 0 | 0 | 0 | 1 | 1 | 0 | 1 | 0 | 0 | 1 |
| 5 | 1 | 0 | 1 | 1 | 1 | 0 | 1 | 0 | 0 | 1 | 1 |
| 6 | 1 | 1 | 0 | 0 | 0 | 0 | 0 | 0 | 0 | 0 | 1 |
| 7 | 1 | 1 | 0 | 0 | 0 | 1 | 1 | 1 | 0 | 0 | 1 |
| 8 | 1 | 0 | 0 | 1 | 1 | 0 | 0 | 1 | 1 | 0 | 1 |
| 9 | 1 | 1 | 0 | 0 | 1 | 1 | 1 | 1 | 0 | 1 | 1 |
| 10 | 1 | 1 | 1 | 1 | 1 | 0 | 1 | 1 | 1 | 1 | 0 |
| 11 | 1 | 1 | 0 | 0 | 1 | 0 | 1 | 1 | 1 | 0 | 1 |
| 12 | 1 | 1 | 0 | 1 | 1 | 0 | 0 | 1 | 0 | 1 | 1 |
| 13 | 1 | 1 | 0 | 1 | 1 | 1 | 1 | 1 | 0 | 0 | 0 |
| 14 | 1 | 1 | 1 | 0 | 0 | 0 | 0 | 0 | 0 | 1 | 1 |
| 15 | 1 | 0 | 1 | 0 | 1 | 0 | 1 | 0 | 1 | 1 | 1 |
| 16 | 1 | 0 | 0 | 1 | 0 | 1 | 0 | 1 | 1 | 1 | 1 |
| 17 | 1 | 0 | 0 | 0 | 0 | 1 | 1 | 0 | 0 | 0 | 0 |
| 18 | 1 | 0 | 1 | 0 | 0 | 1 | 1 | 1 | 0 | 1 | 1 |
| 19 | 1 | 1 | 1 | 1 | 0 | 0 | 0 | 1 | 0 | 0 | 1 |
| 20 | 1 | 0 | 0 | 0 | 1 | 0 | 0 | 1 | 1 | 0 | 1 |
| 21 | 1 | 1 | 0 | 1 | 0 | 1 | 0 | 1 | 0 | 1 | 1 |
| 22 | 1 | 0 | 0 | 1 | 1 | 1 | 0 | 0 | 1 | 0 | 0 |
| 23 | 1 | 1 | 1 | 0 | 0 | 1 | 1 | 0 | 1 | 0 | 1 |
| 24 | 1 | 0 | 1 | 0 | 1 | 1 | 1 | 0 | 1 | 0 | 0 |
| 25 | 1 | 1 | 1 | 0 | 1 | 1 | 1 | 0 | 0 | 1 | 0 |
| 26 | 1 | 0 | 0 | 0 | 0 | 0 | 0 | 0 | 0 | 0 | 0 |
| 27 | 1 | 0 | 1 | 0 | 0 | 0 | 1 | 0 | 0 | 0 | 1 |
| 28 | 1 | 0 | 1 | 1 | 0 | 1 | 0 | 0 | 1 | 1 | 0 |

(continued)

| i | $M_{i,0}$ | $M_{i,1}$ | $M_{i,2}$ | $M_{i,3}$ | $M_{i,4}$ | $M_{i,5}$ | $M_{i,6}$ | $M_{i,7}$ | $M_{i,8}$ | $M_{i,9}$ | $M_{i,10}$ |
|---|---|---|---|---|---|---|---|---|---|---|---|
| 29 | 1 | 0 | 1 | 1 | 1 | 1 | 1 | 1 | 1 | 0 | 0 |
| 30 | 1 | 0 | 1 | 1 | 0 | 0 | 0 | 0 | 1 | 0 | 1 |
| 31 | 1 | 1 | 1 | 1 | 1 | 1 | 1 | 1 | 1 | 1 | 1 |

Example 1

In the LTE-A system, the Reed-Muller encoding uses the base sequence as shown in table 5, the RI information which needs to be fed back is 3 bits, namely is $[o_0^{RI} \ o_1^{RI} o_2^{RI}]$, and because the bit number which needs to be fed back is greater than 2 bits, a linear block code is used to encode, the encoded bit information is repeated, and then according to the encoded target length $Q_{RI}$ of the transmitted feedback information, the sequence of encoded information with the corresponding length $q_0^{RI}, q_1^{RI}, q_2^{RI}, ..., q_{Q_{RI}-1}^{RI}$ is intercepted from the starting location.

Example 2

In this example, the Reed-Muller uses the base sequence as shown in table 6 after the carriers are aggregated, then M=11; there are three component carriers to aggregate, the bit number of the RI which needs to be fed back on each carrier is 3 bits, and then the total bit number of the RI which needs to be fed back is 9, which are represented by $[o_0^{RI} \ o_1^{RI}, ..., o_8^{RI}]$, and because the bit number of the RI which needs to be fed back is 9 and is greater than 2 bits but less than M (M=11), a linear block code is used to encode, the encoded information is repeated, and then according to the encoded target length $Q_{RI}$ of the transmitted feedback information, the sequence of the encoded information with the corresponding length $q_0^{RI}, q_1^{RI}, q_2^{RI}, ..., q_{Q_{RI}-1}^{RI}$ is intercepted from the starting location.

Example 3

In $, q_2^{RI}, ..., q_{Q_{RI}-1}^{RI}$ this example, the Reed-Muller uses the base sequence as shown in table 5 after the carriers are aggregated, then M=13; assume that there are five component carriers to aggregate, the bit number of the RI which needs to be fed back on each carrier is 3 bits, and then the total bit number of the RI which needs to be fed back is 15, which are represented by $[o_0^{RI} \ o_1^{RI}, ..., o_{14}^{RI}]$, and because the bit number of the RI which needs to be fed back is 15 and is greater than M (M=13), a tail-biting convolutional code the constraint length of which is 7 and the bit rate of which is 1/3 as shown in Fig. 2 is used to encode, the encoded information is repeated, and then according to the encoded target length $Q_{RI}$ of the transmitted feedback information, the sequence of the encoded information with the corresponding length $q_0^{RI}, q_1^{RI}, q_2^{RI}, ..., q_{Q_{RI}-1}^{RI}$ intercepted from the starting location.

Example 4

In this example, the Reed-Muller uses the base sequence as shown in table 7 after the carriers are aggregated, then M=13; there are five component carriers to aggregate, the bit number of the RI which needs to be fed back on each carrier is 3 bits, and then the total bit number of the RI which needs to be fed back is 15, which are represented by $[o_0^{RI} \ o_1^{RI}, ..., o_{14}^{RI}]$, and because the total bit number of the RI which needs to be fed back is 15 and is greater than M (M=13), the cyclic redundancy code the length of which is 8 is first used to check, then a tail-biting convolution code the constraint length of which is 7 and the bit rate of which is 1/3 as shown in Fig. 2 is used to encode, the encoded information is repeated, and then according to the encoded target length $Q_{RI}$ of the transmitted feedback information, the sequence of the encoded information with the corresponding length $q_0^{RI}, q_1^{RI}, q_2^{RI}, ..., q_{Q_{RI}-1}^{RI}$ is intercepted from the starting location.

An apparatus for encoding an acknowledgement/negative acknowledgment response message is provided according to an embodiment of the present invention.

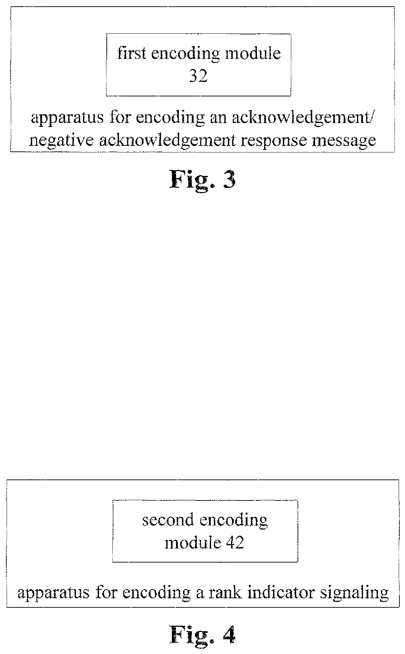

Fig. 3 is a structural block diagram of an apparatus for encoding an acknowledgement/negative acknowledge response message according to an embodiment of the present invention, and as shown in Fig. 3, the apparatus comprises: a first encoding module 32, which is configured to use the encoding mode of a convolutional code to encode the acknowledgement/negative acknowledgement response message when the bit number of the feedback acknowledgement/negative acknowledgement response message is greater than M, wherein the M is a positive integer which is greater than 2.

An apparatus for encoding a rank indicator signalling is provided according to an embodiment of the present invention.

Fig. 4 is a structural block diagram of an apparatus for encoding an rank indicator signalling according to an embodiment of the present invention, and as shown in Fig. 4, the apparatus comprises: a second encoding module 42, which is configured to use the encoding mode of a linear block code to encode the rank indicator signalling when the bit number of the feedback rank indictor signalling is greater than 2.

It should be noted that the apparatus for encoding an acknowledgement/negative acknowledge response message and the apparatus for encoding a rank indicator signalling which are described in the apparatus embodiments correspond to the above method embodiments, and the specific implementation thereof has been described in detail in the method embodiments, which will not be described here redundantly.

In summary, by virtue of the embodiments of the present invention, the problems of encoding when an ACK/NACK response message which is greater than 11 bit is transmitted under the carrier aggregation on the PUSCH in the TDD of the LTE-A system and when a rank indicator signalling which is greater than 2 bit is transmitted on the PUSCH in the LTE-A system can be effectively solved, thus a reliable transmission of the acknowledgement/negative acknowledgement response message and the rank indicator signalling on the PUSCH is ensured.

Apparently, those skilled in the art shall understand that the above modules and steps of the present invention can be realized by using a general purpose calculating device, which can be integrated in one calculating device or distributed on a network which consists of a plurality of calculating devices, and alternatively they can be realized by using the executable program code of the calculating device, so that consequently they can be stored in the storing device and executed by the calculating device, or they may be made into integrated circuit module respectively, or a plurality of modules or steps thereof may be made into one integrated circuit module. In this way, the present invention is not restricted to any particular hardware and software combination.

**Claims**

1. A method for encoding an acknowledgement/negative acknowledgement response message and for encoding a rank indicator signalling, for use in carrier aggregation, **characterized in that** the method comprises:

   when a number of bits of a fed back acknowledgement/negative acknowledgement response message is greater than M, using an encoding mode of a convolutional code to encode the acknowledgement/negative acknowledgement response message, wherein M is a positive integer greater than two;
   when a number of bits of a fed back rank indicator signalling is greater than 2 and no more than N, using an encoding mode of a linear block code to encode the rank indicator signalling; and
   when the number of bits of the fed back rank indicator signalling is greater than the N, using an encoding mode of a convolutional code to encode the rank indicator signalling, wherein the N is a positive integer which is greater than 2.

2. The method according to claim 1, **characterized in that**, using an encoding mode of convolutional code to encode the acknowledgement/negative acknowledgement response message comprises: using an encoding mode of a tail-biting convolutional code to encode the acknowledgement/negative acknowledgement response message; and after using the encoding mode of a tail-biting convolutional code to encode the acknowledgement/negative acknowledgement response message, the method further comprises: repeating bit information of the encoded acknowledgement/negative acknowledgement response message; and intercepting the repeated bit information from a starting location of the repeated bit information according to a target length of feedback information.

3. The method according to claim 1, **characterized in that**, using the encoding mode of a linear block code to encode the rank indicator signalling comprises:

   using a length of a basic sequence of a linear block code to encode the rank indicator signalling through the following formula:

$$b_i = \sum_{n=0}^{O-1} \left( o_n \cdot M_{i,n} \right) \bmod 2 \, ,$$

wherein $i = 0,1,2, \ldots , B-1$, $b_0, b_1, b_2, b_3, \ldots , b_{B-1}$ represent the encoded bits, $B$ represents the length of the basic sequence, $M_{i,n}$ represents the value of the serial number $i$ in the basic sequence n, and $o_0, o_1, \ldots , o_{O-1}$ represent rank indicator signallings;

and after using the encoding mode of a linear block code to encode the rank indicator signalling, the method further comprises:

repeating bit information of the encoded rank indicator signalling; and
intercepting the repeated bit information from a starting location of the repeated bit information according to a target length of feedback information.

4. The method according to claim 1, **characterized in that**, using the encoding mode of a convolutional code to encode the rank indicator signalling comprises:
using an encoding mode of a tail-biting convolutional code to encode the rank indicator signalling; and
after using the encoding mode of a tail-biting convolutional code to encode the rank indicator signalling, the method further comprises:

repeating bit information of the encoded rank indicator signalling; and
intercepting the repeated bit information from a starting location of the repeated bit information according to a target length of feedback information.

5. The method according to claim 1, **characterized in that** the N comprises one of the following: 11, 12 and 13.

6. The method according to claim 1, **characterized in that** the M is one of the following: 11, 12 and 13.

7. An apparatus for encoding an acknowledgement/negative acknowledgement response message and for encoding a rank indicator signalling, for use in carrier aggregation, **characterized in that** the apparatus comprises:

a first encoding module, configured to use an encoding mode of a convolutional code to encode the acknowledgement/negative acknowledgement response message when a number of bits of a fed back acknowledgement/ negative acknowledgement response message is greater than M, wherein M is a positive integer greater than two; and
a second encoding module, configured to use an encoding mode of a linear block code to encode the rank indicator signalling when a number of bits of a fed back rank indicator signalling is greater than 2 and not more than N, and configured to use an encoding mode of a convolutional code to encode the rank indicator signalling when the number of bits of the fed back rank indicator signalling is greater than N, wherein the N is a positive integer which is greater than 2.

8. The apparatus according to claim 7, **characterized in that**, the first encoding module is configured to:

use an encoding mode of a tail-biting convolutional code to encode the acknowledgement/negative acknowledgement response message;
after the use of the encoding mode of a tail-biting convolutional code to encode the acknowledgement/negative acknowledgement response message, repeat bit information of the encoded acknowledgement/negative acknowledgement response message; and
intercept the repeated bit information from a starting location of the repeated bit information according to a target length of feedback information.

9. The apparatus according to claim 7, **characterized in that,** the second encoding module is configured to:

use a length of a basic sequence of a linear block code to encode the rank indicator signalling through the following formula:

$$b_i = \sum_{n=0}^{O-1} \left( o_n \cdot M_{i,n} \right) \bmod 2 \, ,$$

wherein $i$ = 0,1,2, ... , $B$ - 1, $b_0$, $b_1$, $b_2$, $b_3$, ... , $b_{B-1}$ represent the encoded bits, $B$ represents the length of the basic sequence, $M_{i,n}$ represents the value of the serial number $i$ in the basic sequence n, and $o_0$, $o_1$, ... , $o_{O-1}$ represent rank indicator signallings;

after the use of the encoding mode of a linear block code to encode the rank indicator signalling, repeat bit information of the encoded rank indicator signalling; and intercept the repeated bit information from a starting location of the repeated bit information according to a target length of feedback information.

10. The apparatus according to claim 7, **characterized in that,** the second encoding module is configured to:

use an encoding mode of a tail-biting convolutional code to encode the rank indicator signalling; after the use of the encoding mode of a tail-biting convolutional code to encode the rank indicator signalling, repeat bit information of the encoded rank indicator signalling; and intercept the repeated bit information from a starting location of the repeated bit information according to a target length of feedback information.

11. The apparatus according to claim 7, **characterized in that** the N comprises one of the following: 11, 12 and 13.

12. The apparatus according to claim 7, **characterized in that** the M is a positive integer which is one of the following: 11, 12 and 13.

**Patentansprüche**

1. Verfahren zum Codieren einer Bestätigungs-/Negativbestätigungs-Antwortnachricht und zum Codieren einer Ranganzeigesignalisierung zur Verwendung bei der Trägeraggregation, **dadurch gekennzeichnet, dass** das Verfahren umfasst:

wenn eine Anzahl von Bits einer zurückgemeldeten Bestätigungs-/Negativbestätigungs-Antwortnachricht größer als M ist, Verwenden eines Codierungsmodus eines Faltungscodes zum Codieren der Bestätigungs-/Negativbestätigungs-Antwortnachricht, wobei M eine positive ganze Zahl größer als zwei ist; wenn eine Anzahl von Bits einer zurückgemeldeten Ranganzeigesignalisierung größer als 2 und nicht mehr als N ist, Verwenden eines Codierungsmodus eines linearen Blockcodes zum Codieren der Ranganzeigesignalisierung; und wenn die Anzahl von Bits der zurückgemeldeten Ranganzeigesignalisierung größer als N ist, Verwenden eines Codierungsmodus eines Faltungscodes zum Codieren der Ranganzeigesignalisierung, wobei N eine positive ganze Zahl größer als 2 ist.

2. Verfahren nach Anspruch 1, **dadurch gekennzeichnet, dass** Verwendung eines Faltungscode-Codierungsmodus zum Codieren der Bestätigungs-/Negativbestätigungs-Antwortnachricht umfasst: Verwenden eines Codierungsmodus eines Tail-Biting-Faltungscodes zum Codieren der Bestätigungs-/Negativbestätigungs-Antwortnachricht; und nach Verwendung des Codierungsmodus eines Tail-Biting-Faltungscodes zum Codieren der Bestätigungs-/Negativbestätigungs-Antwortnachricht das Verfahren ferner umfasst: Wiederholen der Bit-Informationen der codierten Bestätigungs-/Negativbestätigungs-Antwortnachricht; und Abfangen der wiederholten Bit-Informationen von einer Startposition der wiederholten Bit-Informationen gemäß einer Ziellänge der Rückmeldungsinformationen.

3. Verfahren nach Anspruch 1, **dadurch gekennzeichnet, dass** Verwendung des Codierungsmodus eines linearen Blockcodes zum Codieren der Ranganzeigesignalisierung umfasst:

Verwendung einer Länge einer Grundsequenz eines linearen Blockcodes zum Codieren der Ranganzeigesignalisierung durch die folgende Formel:

$$b_i = \sum_{n=0}^{Q-1} \left( o_n \cdot M_{i,n} \right) \bmod 2$$

wobei $i = 0,1,2,...,B-1$, $b_0$, $b_1$, $b_2$, $b_3$, ..., $b_{B-1}$ die codierten Bits darstellen, $B$ die Länge der Grundsequenz darstellt, $M_{i,n}$ den Wert der Seriennummer $i$ in der Grundsequenz n darstellt und $o_0$, $o_1$,..., $o_{o-1}$ Ranganzeigesignalisierungen darstellen;

und nach Verwendung des Codierungsmodus eines linearen Blockcodes zum Codieren der Ranganzeigesignalisierung das Verfahren ferner umfasst:

Wiederholen der Bitinformationen der codierten Ranganzeigesignalisierung; und
Abfangen der wiederholten Bitinformationen von einer Startposition der wiederholten Bitinformationen gemäß einer Ziellänge der Rückmeldungsinformationen.

4. Verfahren nach Anspruch 1, **dadurch gekennzeichnet, dass** Verwenden des Codierungsmodus eines Faltungscodes zum Codieren der Ranganzeigesignalisierung umfasst:
Verwendung eines Codierungsmodus eines Tail-Biting-Faltungscodes zum Codieren der Ranganzeigesignalisierung; und

nach Verwendung des Codierungsmodus eines Tail-Biting-Faltungscodes zum Codieren der Ranganzeigesignalisierung das Verfahren ferner umfasst:

Wiederholen von Bitinformationen der codierten Ranganzeigesignalisierung; und
Abfangen der wiederholten Bitinformationen von einer Startposition der wiederholten Bitinformationen gemäß einer Ziellänge von Rückmeldungsinformationen.

5. Verfahren nach Anspruch 1, **dadurch gekennzeichnet, dass** N eine der folgenden Zahlen umfasst: 11, 12 und 13.

6. Verfahren nach Anspruch 1, **dadurch gekennzeichnet, dass** M eine der folgenden ist: 11, 12 und 13.

7. Vorrichtung zum Codieren einer Bestätigungs-/Negativbestätigungs-Antwortnachricht und zum Codieren einer Ranganzeigesignalisierung zur Verwendung bei der Trägeraggregation, **dadurch gekennzeichnet, dass** die Vorrichtung umfasst:

ein erstes Codierungsmodul, das so konfiguriert ist, dass es einen Codierungsmodus eines Faltungscodes verwendet, um die Bestätigungs-/Negativbestätigungs-Antwortnachricht zu codieren, wenn eine Anzahl von Bits einer zurückgemeldeten Bestätigungs-/Negativbestätigungs-Antwortnachricht größer als M ist, wobei M eine positive ganze Zahl größer als zwei ist; und
ein zweites Codierungsmodul, das so konfiguriert ist, dass es einen Codierungsmodus eines linearen Blockcodes verwendet, um die Ranganzeigesignalisierung zu codieren, wenn eine Anzahl von Bits einer zurückgemeldeten Ranganzeigesignalisierung größer als 2 und nicht mehr als N ist, und das so konfiguriert ist, dass es einen Codierungsmodus eines Faltungscodes verwendet, um die Ranganzeigesignalisierung zu codieren, wenn die Anzahl der Bits der zurückgemeldeten Ranganzeigesignalisierung größer als N ist, wobei N eine positive ganze Zahl größer als 2 ist.

8. Vorrichtung nach Anspruch 7, **dadurch gekennzeichnet, dass** das erste Codierungsmodul so konfiguriert ist, um:

einen Codierungsmodus eines Tail-Biting-Faltungscodes zum Codieren der Bestätigungs-/Negativbestätigungs-Antwortnachricht zu verwenden;
nach der Verwendung des Codierungsmodus eines Tail-Biting-Faltungscodes zum Codieren der Bestätigungs-/Negativbestätigungs-Antwortnachricht die Bitinformationen der codierten Bestätigungs-/Negativbestätigungs-Antwortnachricht zu wiederholen; und die wiederholten Bitinformationen von einer Startposition der wiederholten Bitinformationen gemäß einer Ziellänge der Rückmeldungsinformationen abzufangen.

9. Vorrichtung nach Anspruch 7, **dadurch gekennzeichnet, dass** das zweite Codierungsmodul so konfiguriert ist:
dass es eine Länge einer Grundsequenz eines linearen Blockcodes verwendet, um die Ranganzeigesignalisierung durch die folgende Formel zu codieren:

$$b_i = \sum_{n=0}^{O-1} \left( o_n \cdot M_{i,n} \right) \bmod 2$$

wobei $i = 0,1,2,..., B-1$, $b_0$, $b_1$, $b_2$, $b_3$, ... , $b_{B-1}$ die codierten Bits darstellen, $B$ die Länge der Grundsequenz darstellt, $M_{i,n}$ den Wert der Seriennummer $i$ in der Grundsequenz $n$ darstellt und $o_0$, $o_1$,..., $o_{O-1}$ Ranganzeige-signalisierungen darstellen;

nach Verwendung des Codierungsmodus eines linearen Blockcodes zum Codieren der Ranganzeigesignalisierung die Bitinformationen der codierten Ranganzeigesignalisierung wiederholt; und die wiederholten Bitinformationen von einer Startposition der wiederholten Bitinformationen gemäß einer Ziellänge der Rückmeldungsinformationen abfängt.

10. Vorrichtung nach Anspruch 7, **dadurch gekennzeichnet, dass** das zweite Codierungsmodul so konfiguriert ist, dass es:

einen Codierungsmodus eines Tail-Biting-Faltungscodes verwendet, um die Ranganzeigesignalisierung zu codieren;

nach Verwendung des Codierungsmodus eines Tail-Biting-Faltungscodes zum Codieren der Ranganzeigesignalisierung, Bitinformationen der codierten Ranganzeigesignalisierung wiederholt; und die wiederholten Bitinformationen von einer Startposition der wiederholten Bitinformationen gemäß einer Ziellänge der Rückmeldungsinformationen abfängt.

11. Vorrichtung nach Anspruch 7, **dadurch gekennzeichnet, dass** N eine der folgenden umfasst: 11, 12 und 13.

12. Vorrichtung nach Anspruch 7, **dadurch gekennzeichnet, dass** M eine positive ganze Zahl ist, die eine der folgenden ist: 11, 12 und 13.

**Revendications**

1. Procédé de codage d'un message de réponse accusé de réception/accusé de réception négatif et de codage d'une signalisation d'un indicateur de rang, pour une utilisation dans l'agrégation de porteuses, **caractérisé en ce que** le procédé comprend :

lorsque le nombre de bits d'un message de réponse accusé de réception/accusé de réception négatif rétro-transmis est supérieur à M, l'utilisation d'un mode de codage par code convolutif pour coder le message de réponse accusé de réception/ accusé de réception négatif, dans lequel M est un nombre entier positif supérieur à deux ;

lorsque le nombre de bits d'une signalisation d'indicateur de rang rétro-transmise est supérieur à 2 et inférieur ou égal à N, l'utilisation d'un mode de codage par code en blocs linéaire pour coder la signalisation d'indicateur de rang ; et

lorsque le nombre de bits de la signalisation d'indicateur de rang rétro-transmise est supérieur à N, l'utilisation d'un mode de codage par code convolutif pour coder la signalisation d'indicateur de rang, dans lequel N est un nombre entier positif qui est supérieur à 2.

2. Procédé selon la revendication 1, **caractérisé en ce que**, l'utilisation d'un mode de codage par code convolutif pour coder le message de réponse accusé de réception/accusé de réception négatif comprend : l'utilisation d'un mode de codage par code convolutif en boucle pour coder le message de réponse accusé de réception/ accusé de réception négatif ; et après l'utilisation du mode de codage par code convolutif en boucle pour coder le message de réponse accusé de réception/accusé de réception négatif, le procédé comprend en outre : la répétition des informations binaires du message de réponse accusé de réception/accusé de réception négatif codé ; et l'interception des informations binaires répétées à partir d'une position de départ des informations binaires répétées en fonction d'une longueur cible des informations de rétroaction.

3. Procédé selon la revendication 1, **caractérisé en ce que**, l'utilisation du mode de codage par code en blocs linéaire pour coder la signalisation d'indicateur de rang comprend :

l'utilisation de la longueur d'une séquence de base d'un code en blocs linéaire pour coder la signalisation d'indicateur de rang selon la formule suivante :

$$b_i = \sum_{n=0}^{o-1} (o_n \cdot M_{i,n}) mod 2$$

dans laquelle $i$ = 0, 1, 2, ... , $B$-1, $b_0$, $b_1$, $b_2$, $b_3$, ..., $b_{B-1}$ représentent les bits codés, $B$ représente la longueur de la séquence de base, $M_{i,n}$ représente la valeur du numéro de série $i$ dans la séquence de base $n$, et $o_0$, $o_1$, ..., $o_{0-1}$ représentent les signalisations d'indicateur de rang ;
et après l'utilisation du mode de codage par code en blocs linéaire pour coder la signalisation d'indicateur de rang, le procédé comprend en outre :

la répétition des informations binaires de la signalisation d'indicateur de rang codée ; et
l'interception des informations binaires répétées à partir d'une position de départ des informations binaires répétées en fonction d'une longueur cible d'informations de rétroaction.

4. Procédé selon la revendication 1, **caractérisé en ce que**, l'utilisation du mode de codage par code convolutif pour coder la signalisation d'indicateur de rang comprend :

l'utilisation d'un mode de codage par code convolutif en boucle pour coder la signalisation d'indicateur de rang ; et
et après l'utilisation du mode de codage par code convolutif en boucle pour coder la signalisation d'indicateur de rang, le procédé comprend en outre :

la répétition des informations binaires de la signalisation d'indicateur de rang codée ; et
l'interception des informations binaires répétées à partir d'une position de départ des informations binaires répétées en fonction d'une longueur cible d'informations de rétroaction.

5. Procédé selon la revendication 1, **caractérisé en ce que** N comprend l'une des valeurs suivantes : 11, 12 et 13.

6. Procédé selon la revendication 1, **caractérisé en ce que** M est l'une des valeurs suivantes : 11, 12 et 13.

7. Appareil de codage d'un message de réponse accusé de réception/accusé de réception négatif et de codage d'une signalisation d'indicateur de rang, pour une utilisation dans l'agrégation de porteuses, **caractérisé en ce que** l'appareil comprend :

un premier module de codage, configuré pour utiliser un mode de codage par code convolutif afin de coder le message de réponse accusé de réception/accusé de réception négatif lorsque le nombre de bits d'un message de réponse accusé de réception/accusé de réception négatif rétro-transmis est supérieur à M, dans lequel M est un nombre entier positif supérieur à deux ; et
un second module de codage, configuré pour utiliser un mode de codage par code en blocs linéaire afin de coder la signalisation d'indicateur de rang lorsque le nombre de bits d'une signalisation d'indicateur de rang rétro-transmise est supérieur à 2 et inférieur ou égal à N, et configuré pour utiliser un mode de codage par code convolutif afin de coder la signalisation d'indicateur de rang lorsque le nombre de bits de la signalisation d'indicateur de rang rétro-transmise est supérieur à N, dans lequel N est un nombre entier positif qui est supérieur à 2.

8. Appareil selon la revendication 7, **caractérisé en ce que**, le premier module de codage est configuré pour :

utiliser un mode de codage par code convolutif en boucle pour coder le message de réponse accusé de réception/accusé de réception négatif ;
après l'utilisation du mode de codage par code convolutif en boucle pour coder le message de réponse accusé de réception/accusé de réception négatif, répéter les informations binaires du message de réponse accusé de réception/accusé de réception négatif codé ; et
intercepter les informations binaires répétées à partir de la position de départ des informations binaires répétées en fonction d'une longueur cible d'informations de rétroaction.

9. Appareil selon la revendication 7, **caractérisé en ce que**, le second module de codage est configuré pour :

utiliser la longueur d'une séquence de base d'un code en blocs linéaire pour coder la signalisation d'indicateur de rang selon la formule suivante :

$$b_i = \sum_{n=0}^{o-1} (o_n \cdot M_{i,n}) mod2$$

dans laquelle $i = 0, 1, 2, ..., B\text{-}1, b_0, b_1, b_2, b_3, ..., b_{B-1}$ représentent les bits codés, $B$ représente la longueur de la séquence de base, $M_{i,n}$ représente la valeur du numéro de série $i$ dans la séquence de base $n,$ et $o_0, o_1, ..., o_{0-1}$ représentent les signalisations d'indicateur de rang ;
après l'utilisation du mode de codage par code en blocs linéaire pour coder la signalisation d'indicateur de rang, répéter les informations binaires de la signalisation d'indicateur de rang codée ; et intercepter les informations binaires répétées à partir d'une position de départ des informations binaires répétées en fonction d'une longueur cible d'informations de rétroaction.

10. Appareil selon la revendication 7, **caractérisé en ce que**, le second module de codage est configuré pour :

utiliser un mode de codage par code convolutif en boucle pour coder la signalisation d'indicateur de rang ;
après l'utilisation du mode de codage par code convolutif en boucle pour coder la signalisation d'indicateur de rang, répéter les informations binaires de la signalisation d'indicateur de rang codée ; et intercepter les informations binaires répétées à partir de la position de départ des informations binaires répétées en fonction d'une longueur cible d'informations de rétroaction.

11. Appareil selon la revendication 7, **caractérisé en ce que** N comprend l'une des valeurs suivantes : 11, 12 et 13.

12. Appareil selon la revendication 7, **caractérisé en ce que** M est un nombre entier positif qui est l'une des valeurs suivantes : 11, 12 et 13.

reference signal                    reference signal

| channel quality indicator/ precoding matrix index | rank indictor | acknowledgement /negative acknowledgement response message | data |

## Fig. 1

$c_k$

D   D   D   D   D   D

$d_k^{(0)}$ $G_0 = 133$ (Octal)

$d_k^{(1)}$ $G_1 = 171$ (Octal)

$d_k^{(2)}$ $G_2 = 165$ (Octal)

## Fig. 2

first encoding module
32

apparatus for encoding an acknowledgement/
negative acknowledgement response message

**Fig. 3**

second encoding
module 42

apparatus for encoding a rank indicator signaling

**Fig. 4**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008301536 A1

- EP 1231806 A1

**Non-patent literature cited in the description**

- Physical Layer. **ANTII TOSKALA et al.** LTE for UMTS: OLDMA and SC-LDMA Based Radio Access. Wiley, 12 June 2009, 83-135